(19) Europäisches Patentamt

European Patent Office

Office européen des brevets

(11) **EP 2 763 396 A1**

(12) **EUROPEAN PATENT APPLICATION**

(43) Date of publication:
**06.08.2014 Bulletin 2014/32**

(51) Int Cl.:
*H04N 5/235* (2006.01)      *H04N 5/355* (2011.01)

(21) Application number: **13305106.0**

(22) Date of filing: **30.01.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ST-Ericsson SA
1228 Plan-les-Ouates (CH)**

(72) Inventor: **Drouot, Antoine
75017 Paris (FR)**

(74) Representative: **Cabinet Plasseraud
52, rue de la Victoire
75440 Paris Cedex 09 (FR)**

(54) **Automatic exposure bracketing**

(57) A method of determining a range of exposure values for bracketing exposures in a digital camera, the method comprising: determining a first exposure value for capturing a digital image frame, acquiring a digital image frame, comprising one or more pixels, using a second exposure value that differs from the first exposure value, comparing a saturation level of a pixel in the acquired frame with a predetermined threshold, and determining the range of exposure values on the basis of the comparison.

EP 2 763 396 A1

**Description**

**BACKGROUND**

**Technical Field**

The described embodiments relate to methods for automatic exposure control, and devices using such methods. More particularly, the embodiments relate to methods for providing automatic exposure bracketing in digital cameras. The embodiments also relate to multi-shot high dynamic range (HDR) imaging using such automatic exposure bracketing. The embodiments also relate to computer program products for implementing the methods.

The embodiments find applications in, in particular, cell phones, smart phones, tablets, digital cameras and so forth.

**Related Art**

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Many digital cameras, most particularly digital cameras which employ small pixel sizes, exhibit a problem in that the dynamic range of the camera is rather limited. This limitation can, for example, cause a problem in that the dynamic range of the camera may be too small to adequately capture an image from a scene which contains a wide range of light levels (luminosities).

HDR imaging is a technique whereby the effective dynamic range of a digital camera can be increased by acquiring two or more normal (i.e. low dynamic range (LDR)) images with different exposure values (EVs). By subsequently aligning the images and merging them, a single image with a higher dynamic range can be produced. This technique is, for example, described in EP1507234, and is generally known as high dynamic range imaging.

The exposure values for each of the LDR images used in such a process are typically different from the nominal exposure value of the scene. Thus, if three LDR images are acquired, then it is usual to take one at the nominal EV of the scene, this is termed the "reference image". The EV of the scene can be determined by any exposure metering system. The remaining two images will usually be acquired at EV+1 and EV-1. Such a set of images can be denoted (-1, 0, +1), and this represents the range of EVs used during the exposure bracketing.

Clearly, any number of images greater than one can be used in such exposure bracketing, and common sets used for this purpose include (-2, 0, +2), (-2, -1, 0, +1, +2), (-2, 0, +1, +2).

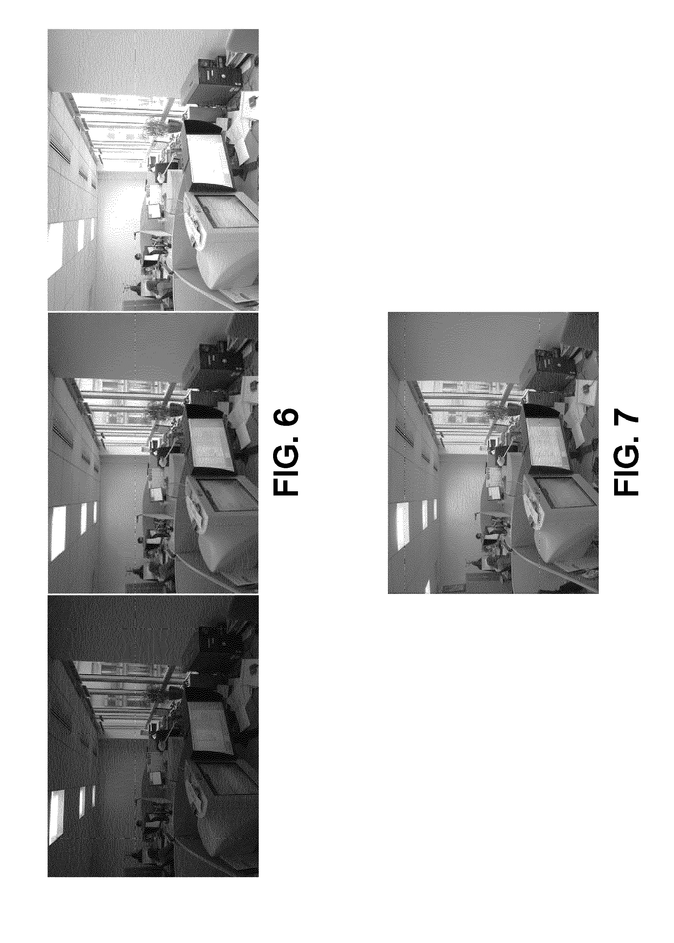

Figure 6 illustrates an example in which the set of EVs used is (-2, 0, +2). An HDR image produced by combining the set of images in Figure 6 is shown in Figure 7.

As noted above, it is desirable to have a large dynamic range when the scene being photographed has a high luminosity range, so that a large part of this range can be captured. With the techniques of exposure bracketing, this can be achieved by employing a large exposure range. However, having an exposure range that is too large compared to the scene luminosity range must be avoided, because it makes the registration of images more difficult, and wastes a large part of the dynamic range of the sensor, leading in both cases to degraded image quality.

Accordingly, there is a need to provide a means by which an optimal exposure range can be determined for a scene having an arbitrary luminosity range.

Currently, no solution has been proposed to the problem of exposure range determination. Rather, existing implementations of exposure bracketing use one of various workarounds.

The most basic workaround is to employ a fixed exposure range. Typically this is set to (-1, 0, +1), or (-1, +1). This solution suffers from the problem that it takes no account for any variation in the scene content and illumination. As a result, this method will not in general properly capture the full range of luminosity in scenes having a high contrast.

A second common workaround, often employed in digital single lens reflex cameras (DSLRs), is to permit the exposure range to be manually selected prior to acquiring a set of bracketed images. In this solution, the user must choose the maximum EV delta (i.e. difference) from the nominal exposure. This solution is generally an improvement over the first solution (above), but suffers from the problem that the user must either have the required expertise to choose the correct parameters, or rely on a trial-and-error strategy.

Thirdly, a workaround described in EP1507234 employs an exposure range that is fixed but very large, and that contains many acquired images. With this method, even the largest scene illumination range can be correctly captured. An algorithm then chooses a suitable sub-set of the acquired images as the useful exposure range. This workaround can be viewed as an extension of the first method, and has the drawbacks of being extremely costly in terms of both memory and computation requirements.

It is an aim of the embodiments herein described to overcome or mitigate at least some of the above described limitations.

## SUMMARY

According to a first aspect, there is provided a method of determining a range of exposure values for bracketing exposures in a digital camera, the method comprising: determining a first exposure value for capturing a digital image frame, acquiring a digital image frame, comprising one or more pixels, using a second exposure value that differs from the first exposure value, comparing a saturation level of a pixel in the acquired frame with a predetermined threshold, and determining the range of exposure values on the basis of the comparison.

Thus, advantageously, an optimum range of exposure values for bracketing exposures in a digital camera can be automatically derived on the basis of saturation levels of one or more pixels. This optimum range is the smallest range that permits capture of most of the dynamic range of a scene that is being imaged. This method can enable images to be taken at different exposure values within the bracketed range to thereby achieve a set of exposures that can be combined to form a singe high-dynamic range image that has an optimum dynamic range for the current scene conditions.

In alternative or complementary embodiments, the range is a function of the difference between the first exposure value and the second exposure value. Thus, advantageously, the range can be determined on the basis of frames captured from the sensor using saturation levels of pixel(s) on the sensor, thereby providing an accurate result.

In alternative or complementary embodiments, the comparison of the saturation level comprises comparing the saturation level of a plurality of pixels in the acquired frame with a predetermined threshold. Thus, advantageously, the method provides a simple yet accurate measure for calculating the range since it uses more than one pixel value.

In alternative or complementary embodiments, step c further comprises determining whether a predetermined fraction of the plurality of the pixels are saturated above and/or below the predetermined threshold. Thus, advantageously, the method provides that a statistical approach can be employed to thereby provide a simple yet accurate result that can be based on the result of a number of the pixels of the image, or even all of the pixels in the image.

In alternative or complementary embodiments, steps b and c are repeated for a plurality of second exposure values. Thus, advantageously, the method can be continued until a suitable range of exposure values have been found.

In alternative or complementary embodiments, a lower limit of the range is a function of the maximum value of the second exposure value for which the relation $P_{max} < T_{mim}$ is satisfied, where $P_{max}$ is the fraction of the pixels that are saturated above a first predetermined threshold and $T_{min}$ is a predetermined fraction of the pixels. Thus, advantageously, the method can ensure that only a small fraction of the pixels in an image that is subsequently acquired will be saturated beyond a given threshold. Additionally, this provides that the derived value of the lower limit of the range is the maximum that permits capture of most of the dynamic range of the scene being imaged.

In alternative or complementary embodiments, an upper limit of the range is a function of the minimum value of the second exposure value for which the relation $P_{min} < T_{max}$ is satisfied, where $P_{min}$ is the fraction of the pixels that are saturated below a second predetermined threshold and $T_{max}$ is a predetermined fraction of the pixels. This provides that the derived value of the upper limit of the range is the minimum that permits capture of most of the dynamic range of the scene being imaged.

In alternative or complementary embodiments, the first exposure value is determined by an auto-exposure algorithm and steps b, c and d are carried out after the exposure value is determined. Thus, advantageously, the method can be implemented after a standard automatic exposure algorithm has derived a nominal exposure value.

In alternative or complementary embodiments, a first estimate of the first exposure value is determined by an auto-exposure algorithm, and steps b, c and d are repeatedly carried our using the first estimate of the first exposure value. Thus, advantageously, the method can be carried out whilst a standard automatic exposure value algorithm is in the process of determining a nominal exposure value, thereby reducing the delay in deriving the range.

In alternative or complementary embodiments, the method is performed iteratively, and the value of the second exposure value for a current iteration is a function of the value of the second exposure value determined for a previous iteration.

In alternative or complementary embodiments, the value of the second exposure value for a current iteration is also a function of the value of the first exposure value determined for a previous iteration.

In alternative or complementary embodiments, a high dynamic range image is generated by combining a plurality of images acquired using exposure values at the limits of the determined range for bracketing. Thus, advantageously, a high dynamic range image can be generated using an optimum range of exposure values for the current scene.

In a second aspect, there is provided a digital camera apparatus for determining a range of exposure values for bracketing exposures in a digital camera, the camera comprising: an image sensor, means for determining a first exposure value for capturing a digital image frame, means for acquiring a digital image frame from the image sensor, the frame comprising one or more pixels, and being acquired using a second exposure value that differs from the first exposure value, means for comparing a saturation level of a pixel in the acquired frame with a predetermined threshold, and means for determining the range of exposure values on the basis of the comparison.

Further aspects provide a computer program product comprising computer readable instructions which, when run on a computer system, cause the computer system to perform the method of the first aspect, and a computer readable medium comprising the computer program product.

## BRIEF DESCRIPTION OF THE DRAWINGS

The present invention is illustrated by way of example, and not by way of limitation, in the figures of the accompanying drawings, in which like reference numerals refer to similar elements and in which:

- Figure 1 illustrates a simplified diagram of a mobile phone camera in accordance with an embodiment;
- Figure 2 illustrates the process for taking a photo with the camera of Figure 1;
- Figure 3 illustrates the process for calculating $EV_{max}$ according to a first embodiment;
- Figure 4 illustrates the process for calculating $EV_{min}$ according to a first embodiment;
- Figure 5 illustrates a simplified diagram of a mobile phone camera in accordance with a second embodiment;
- Figure 6 illustrates an example of a bracketed set of images; and
- Figure 7 illustrates a high-dynamic range image generated from the bracketed set of Figure 6.

## DETAILED DESCRIPTION

Exposure determination for photography has historically been accomplished using light meters (photometers) with photo sensitive electronic components to measure the level of reflected light that arrives at a camera. In mobile devices, for reasons of space and cost, such photometers are not normally used. Instead, the exposure is determined via a statistical analysis of captured image sensor data. The present invention takes advantage of this fact, by performing a specific analysis on such sensor data to enable the determination of the optimal exposure range for exposure bracketing.

An embodiment will now be described with reference to a digital camera that is in a mobile telephone. The skilled person will understand that the embodiment is not limited to digital cameras in mobile telephones. Rather, the digital camera could equally be in any of various mobile or static devices. Such devices can include smart phones, tablet computers, laptop or desktop computers, digital cameras, webcams and so forth.

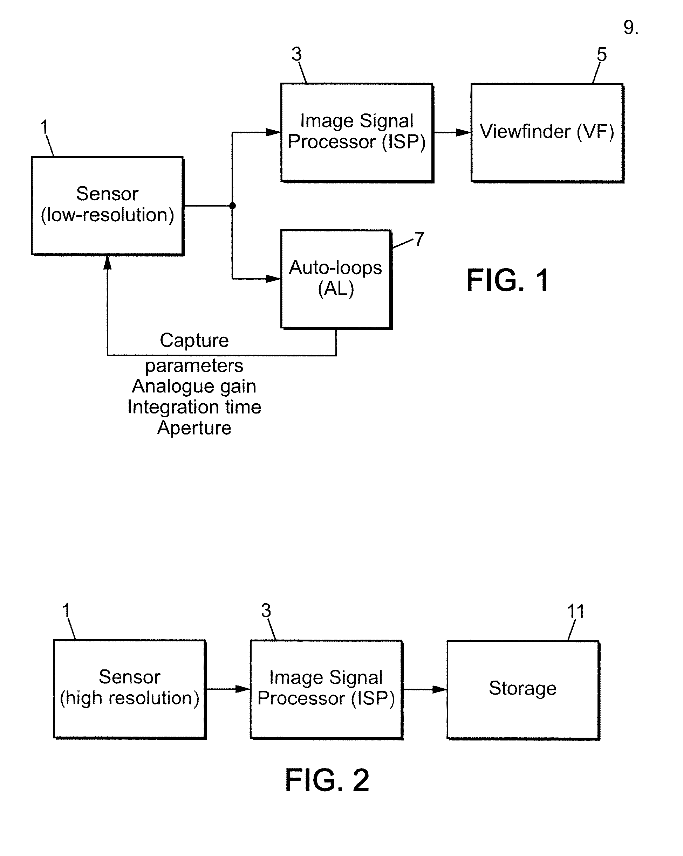

Figure 1 illustrates a simplified diagram of a mobile phone video camera 9 in which the digital sensor is in "streaming mode". The term streaming mode describes a situation in which the sensor 1 is configured to capture image frames at a relatively low-resolution. Typically the resolution is of the order of 640x480 or 800x480 pixels, while the frame rate will typically be around 30 frames per second (fps). The resolution is generally selected to be a relatively small fraction of the available resolution in the sensor 1 so as to permit frames to be acquired and processed rapidly. The frame rate is generally selected such that rapid changes in scene illumination can be taken into account. The skilled person will understand that the particular resolution and frame rate employed are not important to the function of the described embodiments.

The data of the acquired images (frames) are passed to an image signal processor (ISP) 3. The ISP 3 processes the data into full colour images. The data of the full colour images are then passed to an electronic viewfinder 5, and displayed on the viewfinder 5 of the camera 9. Using these displayed images, a user is able to compose and frame a picture.

To permit automatic exposure control, the data of the acquired images are also passed to an auto-loops module 7. The auto loops module 7 performs statistical measurements on the sensor (i.e. acquired image) data. The results of these statistical measurements are then used by the auto loops module 7 to drive algorithms that determine the main capture parameters of the camera 9. The algorithms are auto-focus (AF), auto white-balance (AWB) and auto-exposure (AE). Once these capture parameters have been determined by the auto loops module 7, they are passed to the sensor 1. The capture parameters determined are the analogue gain to be set for the sensor 1, the integration time to be used (i.e. the exposure time) and the aperture to be set. This process forms a feedback loop to the camera sensor 1, as the next image is acquired by the sensor 1 with the newly-derived capture parameters. The AWB algorithm result is usually passed to the ISP 3 to allow adjustment of the white balance. As a result, this algorithm is not relevant to the explanation of the present embodiment, and so an explanation will not be provided here. The skilled person will recognise that an auto-focus feature may not be present, for example in the case of a fixed-focus camera. However, in general auto-exposure and auto white-balance are always present. The skilled person will recognise that the auto-loops module 7 can alternatively be formed as a part of the ISP 3.

The AE algorithm is configured to set the exposure parameters for the camera 9. The AE algorithm functions by employing a statistical measure derived from the received image data. In the present embodiment, this measure is the average luminance value of the pixels in the current (low-resolution) frame. The value of the average luminance value is compared with a predetermined threshold. If the average luminance is above the threshold, then the exposure for the subsequent frame is decreased, whereas if the average luminance value is below the threshold, then the exposure is increased.

The term pixel is used here to denote a single-colour picture element within the sensor 1, rather than a full-colour image element. Each pixel will normally be responsive predominantly to one of red, green or blue light by means of a colour filter array (CFA) located in front of the sensor 1. However, the skilled person will recognise that the described embodiment could equally be applied using full-colour pixels.

Changing the exposure can be achieved by changing the gain applied on the sensor 1, by changing the effective exposure time, or by changing the effective optical aperture for an imaging system associated with the sensor 1. Moreover, other possible methods of changing the exposure are also possible, so too is a combination of the methods outlined above. The skilled person will recognise that more sophisticated algorithms than that outlined above can be used. For example, measures of the number of pixels that are saturated to a maximum or minimum value can also be used. It should be noted that due to sensor noise pixels will not generally be saturated to the minimum value, in other words the pixel output value will never be equal to zero. Rather, the term "pixel saturated to a minimum value" should be interpreted to mean that the pixel value is below a given threshold. The particular method employed to change the exposure is not important for the described embodiment.

The AE algorithm is configured to be repeatedly performed for each captured low-resolution frame, and to adjust the exposure parameters for the subsequent frame accordingly. Thus, changes to the scene illumination can be taken into account. In alternative embodiments, the AE algorithm can be configured to be repeated less often, for example every other frame.

The techniques employed for auto-focus (if present) and auto-white balance will not be detailed here since they are not important for the function of the described embodiments.

Figure 2 illustrates the process for taking a photo with the camera 9 in a single-shot, i.e. a non-bracketing, mode. When the user wants to take a photo, they press the shutter button (not shown). This causes the sensor 1 to be reconfigured to a high resolution, for example 5 or 8 megapixels, while maintaining the capture parameters, including the exposure parameters, applied to the frame immediately prior to activation of the shutter button. The sensor 1 output is then captured, passed to the ISP 3, and ultimately stored in storage medium 11. In the described embodiment, the storage medium is a non-volatile storage medium. However, the skilled person will recognise that other storage media could equally be employed.

If the camera 9 is in the exposure bracketing mode, then the beginning of the sequence for taking the photo is essentially similar to that described above. However, after the first photo has been acquired, a different set of exposure parameters are applied to the sensor 1, and a further high resolution image is acquired. Finally, a third set of exposure parameters are applied to the sensor 1, and a third high resolution image is acquired. Thus, a set of three images, each with different exposure values is captured.

As noted above, a bracketing mode can be configured to capture two or more photos. However, for the purpose of explaining the described embodiment, it will be assumed that three images are captured in the bracketing mode. Thus, in the described embodiment three exposure values are used; a nominal exposure value, $EV_0$, one that is below this, $EV_{min}$ and one above, $EV_{max}$. Accordingly, an exposure range ($EV_{max} - EV_{min}$) is used. As noted above, a goal of the described embodiments is to achieve an exposure range that is the minimum that allows capturing of most of the dynamic range of the imaged scene. As noted above, the reason for choosing the smallest possible range is that it makes the merging of the bracketed images relatively more easy while also optimising the use of the dynamic range available from the sensor 1. This combination will normally optimise the HDR image quality.

## First embodiment

In a first embodiment, $EV_{min}$ and $EV_{max}$ are determined when a user presses the shutter button, by the following method:

$EV_{min}$ is set to be the maximum value that satisfies the relation:

$$P_{max} < T_{min} \qquad (1)$$

$EV_{max}$ is set to be the minimum value that satisfies the relation:

$$P_{min} < T_{max} \qquad (2)$$

where;

$P_{min}$ is the percentage of pixels that are saturated to the low value,
$P_{max}$ is the percentage of pixels that are saturated to the high value, and
$T_{max}$ and $T_{min}$ are fixed percentages.

Typical values for $T_{max}$ and $T_{min}$ are $T_{max}=T_{min}=2\%$. However, the skilled person will recognise that other values for these parameter can equally be employed.

The computation of $EV_{min}$ and $EV_{max}$ is made in response to the user pressing the shutter button (whilst the camera 9 is in the streaming mode). Rather than immediately switching the sensor 1 to operate in high resolution after the shutter button is pressed, as is described above, additional processing to determine $EV_{min}$ and $EV_{max}$ is carried out by the auto loops module 7 before switching to the sensor 1 to high resolution.

The additional processing takes the form of applying different exposure parameters sequentially to the sensor 1 until $EV_{min}$ and $EV_{max}$ are found using the relations given above. To compute $EV_{min}$ and $EV_{max}$, a small increment in the EV is applied, $\delta EV$. Typically, the increment is 1/3 or 1 EV, however other larger or smaller increments could equally be applied.

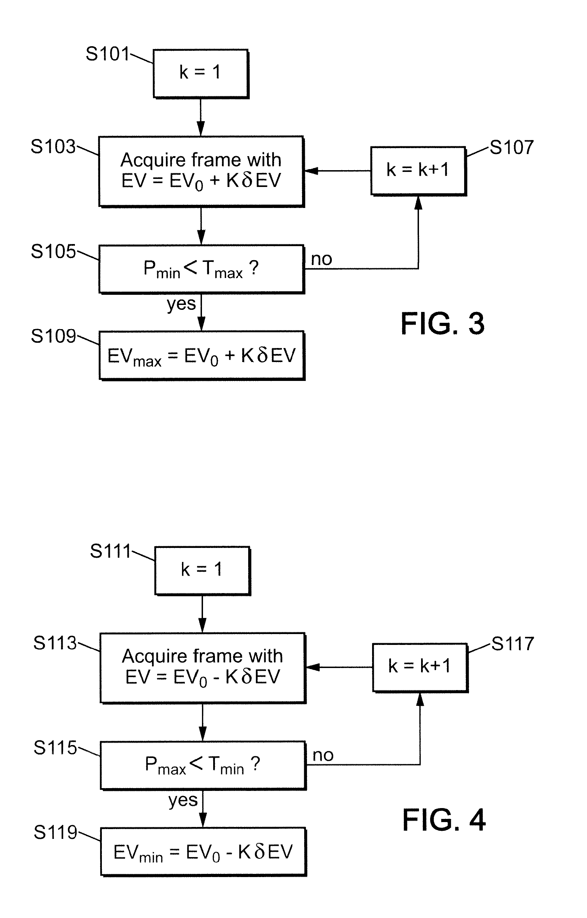

Figure 3 illustrates the process for calculating $EV_{max}$. The process commences by setting a variable, k, equal to 1 S101. Next, a low resolution frame is acquired S103 with the EV set as:

$$EV=EV_0+k\delta EV \qquad (3)$$

Thus, the frame is acquired with an EV that is larger than the nominal EV by $k\delta EV$. Subsequently, a test S105 is performed to determine whether relation (2) is satisfied, in other words whether $P_{min}<T_{max}$. If the relation is not satisfied, then the value of k is incremented by one S107 and another frame is acquired with the new exposure value as given by equation (3). If the relation is satisfied, then $EV_{max}$ is set to equal the current value of EV given by equation (3).

The loop formed by incrementing k S107, acquiring a frame with the EV as governed by equation (3) S103, and testing relation (2) S105, is repeated until relation (2) is satisfied.

Figure 4 illustrates the process for calculating $EV_{min}$. The process again commences by setting a variable, k equal to 1 (S111). Next, a low resolution frame is acquired (S113) with the EV set as:

$$EV=EV_0-k\delta EV \qquad (4)$$

Thus, the frame is acquired with an EV that is smaller than the nominal EV by $k\delta EV$. Subsequently, a test (S115) is performed to determine whether relation (1) is satisfied, in other words whether $P_{max}<T_{min}$. If the relation is not satisfied, then the value of k is incremented by one (S107) and another frame is acquired with the new exposure value as given by equation (4). If the relation is satisfied, then $EV_{min}$ is set to equal the current value of EV given by equation (4).

In a similar manner to the determination of $EV_{max}$, the loop formed by incrementing k S117, acquiring a frame with the EV as governed by equation (4) S103, and testing relation (1) S105, is repeated until relation (1) is satisfied.

Before performing the steps to determine $EV_{min}$ and $EV_{max}$, the viewfinder 5 and/or the ISP 3 can be disconnected to save power and prevent the user from seeing the process. This is possible since only the auto-loops module 7 need be used in the auto bracketing procedure.

Once $EV_{min}$ and $EV_{max}$ are determined, the exposure bracketing process continues in a manner known from prior art devices. In other words, the sensor 1 is reconfigured in high resolution and images are acquired within the EV range that has been determined. As noted above, the number of images can be two, so that one image is acquired at $EV_{min}$ and one at $EV_{max}$. Alternatively, three images can be acquired, one at $EV_{min}$, one at $EV_{max}$ and one at $EV_0$. More images can also be acquired within the range $(EV_{max}-EV_{min})$, and the skilled person will recognise that, for example, the number of images acquired can be a function of the range $(EV_{max}-EV_{min})$ so that more images are acquired if the range is larger.

As described above, the end points of the range of exposure values can defined by $EV_{min}$ and $EV_{max}$ as calculated by the method described above. However, the skilled person will recognise that the end points of the range of exposure values can also be defined to be functions of the values of the values of $EV_{min}$ and $EV_{max}$ calculated by the above described method. Thus, for example, the minimum exposure value can be defined to be some multiple of $EV_{min}$ and a fixed offset can also be applied. The same situation can apply to $EV_{max}$.

**Second embodiment**

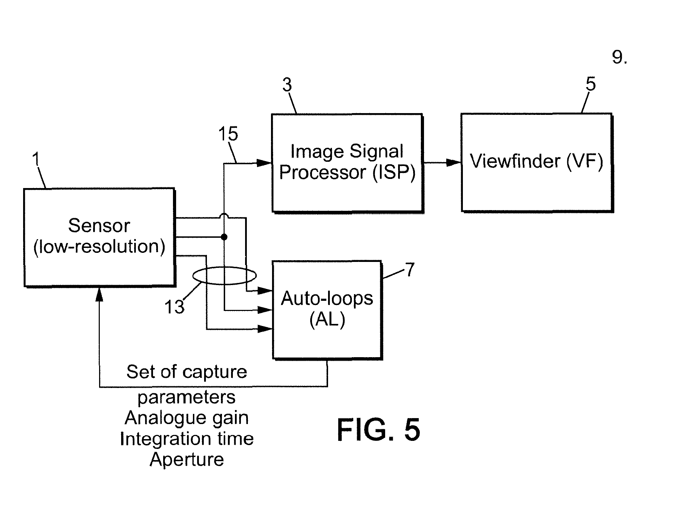

In a second embodiment the auto bracketing mode can be implemented as a modification of the streaming mode of the camera 9. The second embodiment is illustrated in figure 5. In this embodiment, at each iteration of the streaming mode, rather than the providing capture parameters for a single frame, the auto-loops 7 module is instead configured to provide *a set* of capture parameters, to capture 3 frames. This is indicated by the three sets of traces 13 between the sensor 1 and the auto-loops module 7.

This set is composed of the nominal exposure value $EV_0$, computed in the same way as in the usual streaming mode, one under-exposed value $EV_{min}$ and one over-exposed value $EV_{max}$. The sensor 1 acquires these 3 frames sequentially and stores each of them in memory (not shown) so that the auto loops module 7 can analyze them and adjust capture parameters as will be explained below. Only the frame with the nominal exposure is passed to 15, and processed by the ISP, so that the user sees a normal image in the viewfinder 5, albeit at reduced frame rate (one third) compared with the usual case.

The auto-loops algorithm of the streaming mode of the second embodiment is as follows:

On initialisation, all EVs ($EV_0$, $EV_{min}$ and $EV_{max}$) are equal, thus:

$$EV_0(0) = EV_{min}(0) = EV_{max}(0)$$

Where EV(O) signifies the value of EV at initialisation. This is actually a normal initialisation state of an AE algorithm.

Subsequently, an iterative process is performed to determine the range ($EV_{max} - EV_{min}$). At the $n^{th}$ iteration, the value of $EV_0$ will be equal to the EV of a standard AE algorithm. In other words, the EV will be varied in response to changes in the scene luminace as per prior art AE algorithms. However, at the $n^{th}$ iteration, the values of $EV_{min}$ and $EV_{max}$ are adjusted such that following criteria are satisfied:

$$EV_{min}(n) = EV_{min}(n\text{-}1) - \delta EV \qquad\qquad \text{, if } P_{max}(n) > T_{min}$$

$$EV_{min}(n) = EV_{min}(n\text{-}1) + EV_0(n) - EV_0(n\text{-}1)$$

else

$$EV_{max}(n) = EV_{max}(n\text{-}1) + \delta EV \qquad\qquad \text{, if } P_{min}(n) > T_{max}$$

$$EV_{max}(n) = EV_{max}(n\text{-}1) + EV_0(n) - EV_0(n\text{-}1)$$

else

Where the notation used here is the same as for the previous embodiment except for the additional use of the index (n) since they are now a function of the iterative process in the auto-loops module 7.

The skilled person will recognise that more sophisticated algorithms can equally be employed. However, the main principle will always be to ensure that range ($EV_{max} - EV_{min}$) is the smallest range that permits capture of most of the dynamic range of the photographed scene.

In this new streaming mode, when the user presses the shutter button, the optimal exposure range for exposure bracketing is immediately available since the range is determined as a part of the streaming mode. Thus, the sensor 1 can be immediately reconfigured in high resolution mode to start the capture. The advantage of this second embodiment over the first embodiment is therefore that the delay between the shutter button press and the capture, or the "shutter lag" as it is usually called, is reduced.

A possible drawback of the new streaming mode of this embodiment is that the convergence time of the AE algorithm will be increased, since only one frame in three is used to adjust $EV_0(n)$. Therefore, in an alternative embodiment, this problem is overcome by starting the new streaming mode only when the output of the conventional AE mode is sufficiently stable, in other words, the AE algorithm has converged to a particular value.

In an alternative embodiment, the AE algorithm itself is modified, so that it takes into account the under- and over-exposed image statistics, thereby accelerating the convergence. Thus, for example, in a situation where the light level in the scene viewed by the camera 9 is abruptly reduced, a standard AE algorithm will progressively increase the EV to compensate.

However, in such a situation, the value of $EV_{max}(n)$ as derived using the method of the second embodiment, will be higher than the value of $EV_0(n)$. As a result, the algorithm (AE) calculating the nominal exposure, $EV_0$ can use the statistics of the image captured with $EV= EV_{max}(n)$ to determine whether the current nominal EV, $EV_0(n)$, is close to the required nominal EV for the scene. This can be achieved by using the value of $P_{min}(n)$. If the value of $P_{min}(n)$ is still very large, meaning that most of the image is too dark even at $EV= EV_{max}(n)$, then the AE algorithm can accelerate its convergence by increasing the nominal EV by a larger step than it would otherwise have used.

The skilled person will recognise that a corresponding situation exists if the scene illumination is abruptly increased. In this situation, the AE algorithm can use the value of $P_{max}(n)$ from the image taken at $EV= EV_{min}(n)$ for the corresponding determination.

In a further alternative embodiment, the capture rate of low resolution frames during the streaming mode can be increased to compensate for the fact that only one in three frames is used to adjust $EV_0(n)$. Accordingly if, for example, the frame rate was increased by a factor of three, then there would be no overall effect on the convergence time of the AE algorithm.

As with the first embodiment, once $EV_{min}$ and $EV_{max}$ are determined, the exposure bracketing process continues in a manner known from prior art devices. In other words, the sensor 1 is reconfigured in high resolution and images are acquired within the EV range that has been determined. As noted above, the number of images can be two, so that one image is acquired at $EV_{min}$ and one at $EV_{max}$. Alternatively, three images can be acquired, one at $EV_{min}$, one at $EV_{max}$ and one at $EV_0$. More images can also be acquired within the range ($EV_{max} -EV_{min}$), and the skilled person will recognise that, for example, the number of images acquired can be a function of the range ($EV_{max} -EV_{min}$) so that more images are acquired if the range is larger.

**Third embodiment**

In a third embodiment, a mixture of the first and second embodiments can be employed. Typically, in a streaming mode, the camera 9 will output low resolution frames at a rate of 15 to 30 frames per second.

Thus, one iteration of the method of the second embodiment can be performed, for example, once each second even if the shutter button on the camera 9 is not activated by the user. On activation of the shutter button, the method of the first embodiment can be employed using, as a starting point, the current estimations of the values of $EV_{min}$ and $EV_{max}$ that have been derived by the most recent iteration.

Such a method has the advantage over the second embodiment that the convergence time of the AE algorithm is not overly affected, since only a small fraction of the 15-30 frames per second are taken by the automatic bracketing algorithm. The method has the advantage over the first embodiment that the number of iterations (and therefore the time) needed to achieve a result will in general be reduced, because the algorithm will start from an approximation to the desired result.

The skilled person will recognise that each of the described embodiments can be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

**Claims**

1. A method of determining a range of exposure values for bracketing exposures in a digital camera, the method comprising:

    a. determining a first exposure value for capturing a digital image frame,
    b. acquiring a digital image frame, comprising one or more pixels, using a second exposure value that differs from the first exposure value,
    c. comparing a saturation level of a pixel in the acquired frame with a predetermined threshold, and
    d. determining the range of exposure values on the basis of the comparison.

2. A method according to claim 1, wherein the range is a function of the difference between the first exposure value and the second exposure value.

3. A method according to claim 1 or 2, wherein the comparison of the saturation level comprises comparing the saturation level of a plurality of pixels in the acquired frame with a predetermined threshold.

4. A method according to claim 3, wherein step c further comprises determining whether a predetermined fraction of the plurality of the pixels are saturated above and/or below the predetermined threshold.

5. A method according to any preceding claim, wherein steps b and c are repeated for a plurality of second exposure values.

6. A method according to claim 5 when dependent from claim 4, wherein a lower limit of the range is a function of the maximum value of the second exposure value for which the relation $P_{max} < T_{min}$ is satisfied, where $P_{max}$ is the fraction of the pixels that are saturated above a first predetermined threshold and $T_{min}$ is a predetermined fraction of the pixels.

7. A method according to either of claims 5 or 6 when dependent from claim 4, wherein an upper limit of the range is a function of the minimum value of the second exposure value for which the relation $P_{min} < T_{max}$ is satisfied, where $P_{min}$ is the fraction of the pixels that are saturated below a second predetermined threshold and $T_{max}$ is a predetermined fraction of the pixels.

8. A method according to any preceding claim, wherein the first exposure value is determined by an auto-exposure algorithm and steps b, c and d are carried out after the exposure value is determined.

9. A method according to any of claims 1-7, wherein a first estimate of the first exposure value is determined by an auto-exposure algorithm, and steps b, c and d are repeatedly carried our using the first estimate of the first exposure value.

10. A method according to any preceding claim, wherein the method is performed iteratively, and the value of the second exposure value for a current iteration is a function of the value of the second exposure value determined for a previous iteration.

**11.** A method according to claim 10, wherein the value of the second exposure value for a current iteration is also a function of the value of the first exposure value determined for a previous iteration.

**12.** A method according to any preceding claim, further comprising generating a high dynamic range image by combining a plurality of images acquired using exposure values at the limits of the determined range for bracketing.

**13.** A digital camera apparatus for determining a range of exposure values for bracketing exposures in a digital camera, the camera comprising:

an image sensor,
means for determining a first exposure value for capturing a digital image frame,
means for acquiring a digital image frame from the image sensor, the frame comprising one or more pixels, and being acquired using a second exposure value that differs from the first exposure value,
means for comparing a saturation level of a pixel in the acquired frame with a predetermined threshold, and
means for determining the range of exposure values on the basis of the comparison.

**14.** A computer program product comprising computer readable instructions which, when run on a computer system, cause the computer system to perform the method of any of claims 1 to 12.

**15.** A computer readable medium comprising the computer program product according to claim 14.

FIG. 1

FIG. 2

S101 — k = 1

S103 — Acquire frame with
$EV = EV_0 + K\delta EV$

S107 — k = k+1

S105 — $P_{min} < T_{max}$ ?

no

yes

S109 — $EV_{max} = EV_0 + K\delta EV$

## FIG. 3

S111 — k = 1

S113 — Acquire frame with
$EV = EV_0 - K\delta EV$

S117 — k = k+1

S115 — $P_{max} < T_{min}$ ?

no

yes

S119 — $EV_{min} = EV_0 - K\delta EV$

## FIG. 4

**FIG. 5**

FIG. 6

FIG. 7

**Europäisches Patentamt**
**European Patent Office**
**Office européen des brevets**

## EUROPEAN SEARCH REPORT

Application Number

EP 13 30 5106

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/259636 A1 (TZUR MEIR [IL] ET AL) 14 October 2010 (2010-10-14) * paragraphs [0009], [0019], [0039] - [0044], [0048]; claims 3-5; figures 2-4 * | 1-15 | INV. H04N5/235 H04N5/355 |
| X | US 2011/149095 A1 (KIKUCHI SUNAO [JP]) 23 June 2011 (2011-06-23) * paragraphs [0045], [0052]; claim 2; figure 3 * | 1-15 | |
| X | US 2011/090365 A1 (CHA JOON HYUK [KR] ET AL CHA JOON-HYUK [KR] ET AL) 21 April 2011 (2011-04-21) * claim 1; figures 3,4,6 * | 1-15 | |
| X | EP 1 986 422 A1 (SONY CORP [JP]) 29 October 2008 (2008-10-29) * figures 6, 8A, 8B, 8C, 9, 10 * | 1-15 | |

TECHNICAL FIELDS
SEARCHED (IPC)

H04N

The present search report has been drawn up for all claims

| Place of search | Date of completion of the search | Examiner |
|---|---|---|
| Munich | 11 June 2013 | Trimeche, Mejdi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5106

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2013

| Patent document cited in search report | | | Publication date | Patent family member(s) | | Publication date |
|---|---|---|---|---|---|---|
| US 2010259636 | A1 | | 14-10-2010 | US 2010259636 A1 | | 14-10-2010 |
| | | | | WO 2010118177 A1 | | 14-10-2010 |
| US 2011149095 | A1 | | 23-06-2011 | JP 2011135152 A | | 07-07-2011 |
| | | | | US 2011149095 A1 | | 23-06-2011 |
| US 2011090365 | A1 | | 21-04-2011 | KR 20110043162 A | | 27-04-2011 |
| | | | | US 2011090365 A1 | | 21-04-2011 |
| EP 1986422 | A1 | | 29-10-2008 | CN 101296321 A | | 29-10-2008 |
| | | | | EP 1986422 A1 | | 29-10-2008 |
| | | | | JP 4341691 B2 | | 07-10-2009 |
| | | | | JP 2008271368 A | | 06-11-2008 |
| | | | | KR 20080095786 A | | 29-10-2008 |
| | | | | TW 200913682 A | | 16-03-2009 |
| | | | | US 2008266424 A1 | | 30-10-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1507234 A